Europäisches Patentamt

European Patent Office

Office européen des brevets

(11) Publication number: **0 254 563**
**A2**

## (12) EUROPEAN PATENT APPLICATION

(21) Application number: **87306506.4**

(22) Date of filing: **23.07.87**

(51) Int. Cl.4: **F 16 L 47/02**

(30) Priority: **24.07.86 GB 8618114**

(43) Date of publication of application:
**27.01.88 Bulletin 88/04**

(84) Designated Contracting States:
**AT BE CH DE ES FR GB GR IT LI LU NL SE**

(71) Applicant: **ALH SYSTEMS LIMITED**
**Station Road**
**Westbury Wiltshire BA13 4TN (GB)**

(72) Inventor: **Carruthers, Alec**
**30 Westbury Road**
**Bratton Wiltshire (GB)**

(74) Representative: **Calderbank, Thomas Roger et al**
**MEWBURN ELLIS & CO. 2/3 Cursitor Street**
**London EC4A 1BQ (GB)**

(54) **Joining of pipes.**

(57) To join two pipes (1,2) of heat fusible material, an expansible sleeve (4) slid into one of the pipes (1) until it contacts a heater plate (3) between the adjacent ends of the pipes (1,2). The heater plate (3) then heats the ends of the pipes (1,2), and is removed. Then the sleeve (4) is slid so as to overlap the two adjacent ends, and expanded into contact with the inner surfaces of the pipes (1,2). The ends of the pipes (1,2) are then forced together so that they fuse. The sleeve (4) prevents or limits formation of a bead within the pipes (1,2) at the join. An outer sleeve may also be provided around the join to limit the formation of an outer bead. The sleeve (4) is preferably a split cylinder expanded by an inflatable bag within the cylinder.

Also disclosed is an apparatus for cutting the ends of the pipes prior to joining them.

FIG.2b

## Description

<div align="center">JOINING OF PIPES</div>

The present invention relates to a method and apparatus for joining pipes, and in particular to joining such pipes by the forcing together of heated pipe ends.

It is now common to use polyethylene pipe when laying new or replacement gas, water, sewage, or other pipe services. Polyethylene is used because it is one of a number of materials which can easily be joined by heat fusion. Thus, the adjacent ends of two pipes to be heat joined together are heated and forced together (butted) so that they fuse, and a rigid join is formed as the material cools and hardens. This provides a joint of good mechanical strength, with a very low risk of fluid leakage.

However, when the pipes are forced together, material is displaced laterally which forms circumferential beads projecting both inside and outside the pipe. Usually, the pipes are forced together more than is strictly necessary, to ensure that irregularities in the pipe ends do not cause an unsatisfactory join. This means the beads may be large. These beads are disadvantageous for a number of reasons. The bead inside the pipe may create turbulent flow in the fluid passing down the pipe, and also (when the fluid contains solid material) may cause build-up of materials at the bead, thereby resulting in blockage. This would be a problem, for example, in a sewage pipe. Also, it is now becoming common to inspect pipes by passing an inspection device (a "pig") down the pipe and the internal beads may impede the passage of that device. The bead on the outside of the pipe is less of a problem, but it does give a surface ridge, which can hamper handling of the pipes, and also can create a friction problem when the pipe is inserted into the earth by the use of "mole" techniques.

It is known to remove the beads using suitable cutting tools, but these have limited application (it being very difficult to remove the bead inside the pipe) and often give unsatisfactory results.

Therefore, the present invention seeks to provide a method of reducing or eliminating bead formation (particularly inside the pipe) without losing the disadvantages of the pipe joining technique discussed above. It does this by providing a sleeve which fits inside the pipe at the join, which presses against the inside of the pipe and so prevents material being pressed radially inwards, to form a bead.

The sleeve is preferably hollow and of resilient material e.g. steel or other metal, which has a diameter slightly less than the internal diameter of the pipe, and is split along its length. By forcing the walls of the sleeve outwardly, the sleeve may be pressed against the inside of the pipe. It is possible to force the walls of the sleeve outwardly by a mechanical means, such as a jacking arrangement or by conical displacement. However, it is preferable for an inflatable inner member to be provided inside the sleeve, which forces the walls of the sleeve outwards. The external surface of the sleeve, which comes into contact with the pipe (and in particular the heated material at the join), may be coated with an anti-stick material such as PTFE, e.g. Teflon (Registered Trade Mark).

Therefore, in a method according to the present invention, the ends of the pipes to be joined may be heated, and the sleeve positioned within the pipes at the join. The sleeve is then expanded to contact the inside walls of the pipes, and then the ends of the pipes are forced together until satisfactory fusion is achieved. Once the join has solidified, the means expanding the sleeve is removed, and the sleeve returns to its original diameter for removal from the pipe.

If some flow of melted material is necessary at the join in order to achieve efficient fusion of the two pipe ends, then a small circumferential recess may be provided in the sleeve, thereby providing a very low bead in that recess.

The above discussion deals with the elimination or reduction, of the internal bead. To eliminate, or reduce, the external bead, another sleeve may be fitted round the outside of the pipes, that outer sleeve being initially over-sized and having means for reducing its internal diameter until it is clamped around the pipes at the join. Preferably, such an outer sleeve has a pressure relief opening to prevent air from becoming trapped between the pipes and the outer sleeve when the ends of the pipes are forced together.

Embodiments of the invention will now be described in detail, by way of example, with reference to the accompanying drawings in which:

Figs. 1a and 1b show the positioning of a sleeve inside two pipes to be joined together;

Figs. 2a and 2b show the sleeve in more detail, Fig. 2a being a transverse sectional view through pipe and sleeve, and Fig. 2b being an axial sectional view;

Figs. 3a and 3b are cross sectional views of pipe and sleeve, showing an alternative sleeve arrangement;

Fig. 4 is an axial sectional view, showing a tool for cutting the ends of a pipe; and

Figs. 5a and 5b show an outer sleeve for fitting around the pipe ends to be joined, Fig. 5a being an axial sectional view through pipe and sleeve, and Fig. 5b being a transverse sectional view.

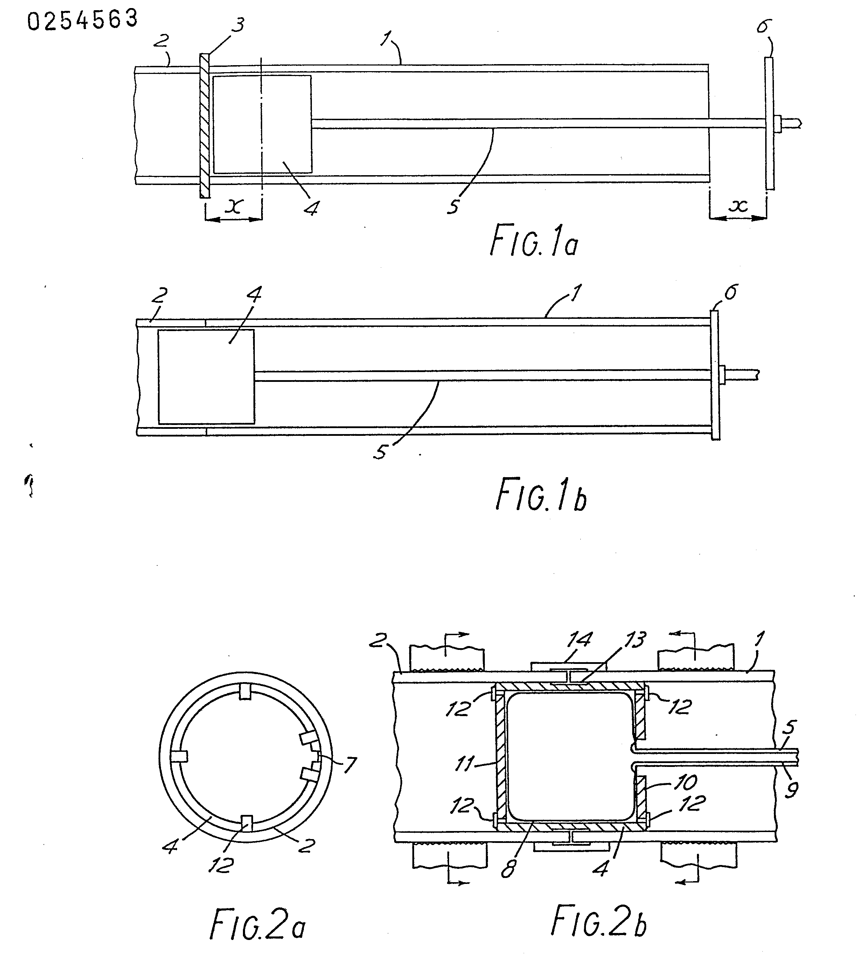

The joining together of the ends of two pipes according to the present invention will now be discussed in detail with reference first to Figs. 1a and 1b. Fig. 1a shows the heating of the adjacent ends of two pipes 1,2 by a heater plate 3. The ends of the pipes 1,2 are heated until they soften sufficiently to enable them to fuse together. This, in itself, is a standard technique. As shown in Fig. 1a, a expansible sleeve 4 is slid inside one of the pipes 1, the sleeve 4 being connected by a rod 5 to an end plate 6. The end plate 6 is movable on the rod 5, and when the sleeve 4 is slid into the pipe 1 so that it abuts against the heater plate 3, the end plate 6 is positioned so that it is spaced from the free end of the pipe 1 by a distance "X" equal to half the axial length of the sleeve 4. Then, the heater plate 3, is slid sideways from between the ends of the pipes 1,2, and the sleeve 4 slid further into the pipes until the end plate 6 abuts against the free end of the pipe 1. This is the position shown in Fig. 1b with the sleeve 4 partially in each pipe 1,2, at the join. In this position the sleeve 4 is expanded until it contacts the inner walls of the pipes 1,2, and then the pipes are forced together to cause their ends to fuse. Once the ends of the pipe have fused, and cooled, the sleeve can be contracted and removed from the pipes 1,2.

In practice, using a polyethylene pipe, the ends of the pipes 1,2, heated by the heater plate 3, stay sufficiently soft for fusion for around one minute, thereby giving sufficient time for the sleeve 4 to be positioned and expanded into place.

Referring now to Figs. 2a and 2b, an embodiment of a suitable internal sleeve is shown in more detail. The sleeve 4 consists of a steel cylinder with an axial slit 7 which permits its diameter to be expanded to fit the interior of the pipes 1 and 2.

The sleeve 4 could be expanded using jacks or by a conical insert, but preferably there is an inflatable bag 8 within the sleeve 4 connected via a pipe 9 extending through the rod 5 to an external pumping means. Plates 10 and 11 prevent the bag 8 from expanding axially, the plates 10 and 11 being held within the sleeve 4 by flanges 12 on the sleeve 4. A circumferential recess 13 may be provided in the outer surface of the sleeve to permit some of the pipe material to be forced into that recess as the pipes 1 and 2 are pressed together, the recess 13 limiting the extent of the bead thus formed. The external surface of the sleeve 4 may be coated with a PTFE coating, e.g. of Teflon (Registered Trade Mark), or other anti-stick coating.

If the sleeve 4 is made of steel or similar material, it will be sufficiently resilient to enable it to return to its original size once the pressure in the bag 8 has been removed, permitting the sleeve 4 to be removed easily from the pipes after the join has been made.

Fig. 2b also shows the presence of an outer sleeve 14 to limit the formation of a bead outside the pipe, and this will be discussed in more detail later.

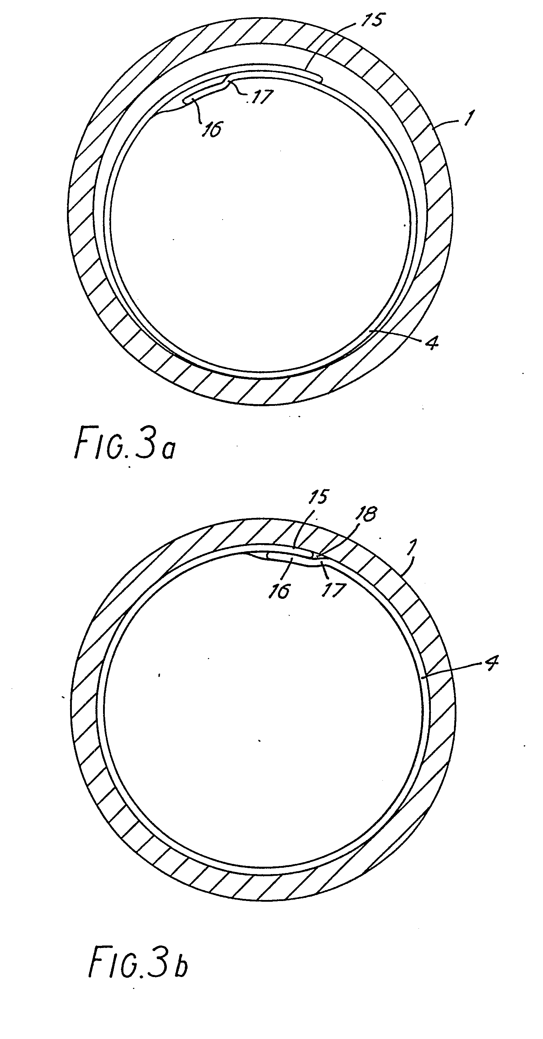

One difficulty with the arrangement shown in Figs. 2a and 2b is that there may be some bead formation at the slot 7 in the sleeve 4. To prevent, or at least minimise this, the arrangement shown in Figs. 3a and 3b may be used, in which the sleeve 4 is split, but the ends 15,16 overlap when the sleeve is in the unexpanded position shown in Fig. 3a. The end 16 of the sleeve is displaced inwards by an angled part 17 relative to the generally circular sleeve, so that when the sleeve 4 is expanded as shown in Fig. 3b, the ends 15 and 16 remain overlapping, but with the angled part 17 of the end 16 fitting adjacent the end 15 of the sleeve so that only a very small part 18 of the pipe 1 is not in contact with the outside surface of the sleeve 4.

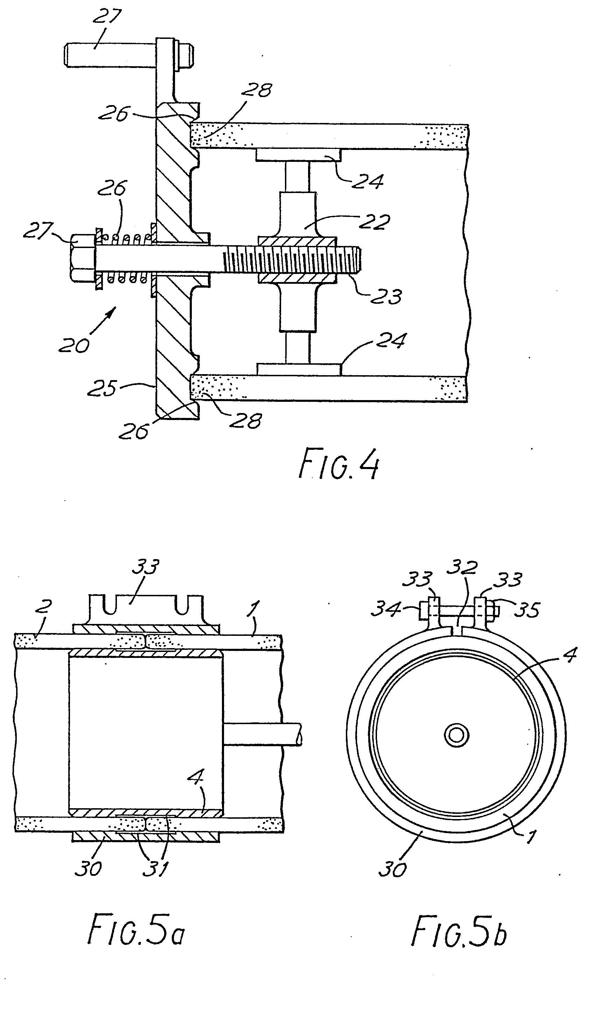

It is important that the ends of the pipes 1,2 fit together as accurately as possible before the join is made, so that only a small amount of material is forced aside during the joining process. In general, the ends of the pipes are squared-off so that a reasonably accurate connection can be made. However, a "bloom" thought to be of oxidised material, appears on the end of the pipe if it is exposed for any length of time, and it is desirable to remove this shortly before the joining of pipes, to ensure a satisfactory join. Fig. 4 shows a device for achieving this. The device 20 for removing a small amount of material from the end of a pipe 21, consists of a clamping unit 22 which fits inside the pipe and which supports a rod 23 so that it extends axially of the pipe. This is achieved by adjustable legs 24 which are moved radially outwardly in the pipe until they contact with the inner surface of the pipe 21. The movement of these legs 24 is controlled so that the shaft 23 lies on the axis of the pipe. A cutting unit 25 is mounted on the rod 23, and is biased by a spring 26 between it and a boss 27 towards the end 28 of the pipe 21. The cutting unit 25 has cutting recesses 26 where it contacts the ends 28 of the pipe 21, and by rotating the cutting unit 25 using a handle 27, it can be ensured that the ends 28 of the pipe 21 are cut down until the "bloom" is removed, the design of the device ensuring that the ends of the pipe remain square. It would also be possible to use this device to square-off the ends of an irregular pipe, but clearly more cutting would then be necessary.

The above discussion has been concerned with preventing, or at least reducing, the size of any bead inside the joined pipes, because it is this bead that is most troublesome. However, it is desirable that any external bead is similarly reduced or eliminated, and to achieve this, the arrangement shown in Fig. 5a and Fig. 5b may be used. As shown in those figures, an outer sleeve 30 (corresponding to the outer sleeve 14 in Fig. 2b) may be fitted around the pipes 1,2 at the join, to limit outward movement of material. As shown in Fig. 5a, a recess 31 similar to the recess 13 in the inner sleeve 4 (see Fig. 2b) may be provided to permit some outward movement of material, yet limit the size of the bead. The outer sleeve 30 has a split 32 therein, and at either side of this slit 32, are flanges 33 between which extend a threaded bolt 34.When a nut 35 is screwed on that bolt, the flanges 33 are forced together thereby reducing the gap 32 and so contracting the sleeve 30 around the pipes 1 and 2. In practice, it is preferable that the slit 32 is not closed completely, but instead remains as a pressure-relief slot to permit the escape of air when the ends of the pipes 1 and 2 are forced together.

Thus, the use of an inner, and (preferably) an outer sleeve which are fitted around the join of two pipes, before those pipes are forced together, may limit the outward flow of material from that join, thereby reducing or eliminating bead formation. Thus, the advantages of the method of joining pipes by forcing them together are retained, but the problems associated with the formation of beads may be reduced.

## Claims

1. A method of joining two pipes of heat fusible material, in which a sleeve is fitted circumferentially adjacent the ends of the two pipes and the ends of the pipes are heated and forced together to cause them to fuse, whereby the sleeve limits flow of material of the pipe ends when they are forced together.

2. A method according to claim 1, wherein the ends of the pipe are heated by a heater plate interposed between those ends.

3. A method according to claim 2, wherein the sleeve is first positioned in one pipe with one end in contact with the heater plate between the pipe ends, the heater plate heats the pipe ends and is removed from between those ends, and the sleeve is slid to overlap ends of both of the pipes.

4. A method according to claim 3 wherein a rod extends from the sleeve along the pipe and there is an end plate movable on the rod, and when the sleeve contacts the heater plate the end plate is moved to be spaced by a distance equal to half the axial length of the sleeve from the end of the said one pipe remote from the other pipe, and when the heater plate is removed, the sleeve, rod, and end plate are slid so that the end plate contacts the end of the said pipe remote from the other pipe.

5. A method according to any one of claims 1 to 4, wherein the sleeve is of adjustable diameter, and the method includes fitting the sleeve within the pipe ends with a diameter less than the internal diameter of the pipes, and increasing the diameter of the sleeve to conform to that internal diameter.

6. A method according to claim 5 wherein the sleeve is hollow, and the diameter of the sleeve is increased by expanding an expansible bag within the sleeve.

7. A method according to any one of claims 1 to 4, wherein the sleeve is fitted around the outside of the pipe ends.

8. A method according to any one of the preceding claims wherein the pipe ends to be joined are cut immediately prior to the joining of the pipes.

9. A method of joining to pipes substantially as any one herein described with reference to the accompanying drawings.

10. A sleeve assembly for fitting within pipes to be joined, having a substantially cylindrical sleeve of variable diameter, and means within the cylindrical sleeve for varying that diameter.

11. A sleeve according to claim 10 wherein the cylindrical sleeve has an axial slit therein to permit the diameter of the sleeve to vary.

12. A sleeve according to claim 11, wherein the edges of the cylindrical part overlap at the slit.

13. A sleeve according to any one of claims 10 to 12, wherein the means for varying the diameter of the cylindrical part is an inflatable bag, and the sleeve has end plates for limiting the axial expansion of the bag.

14. A sleeve according to any one of claims 10 to 13, having a circumferential recess in the outer surface of the cylindrical part.

15. A sleeve for fitting within pipes substantially as herein described with reference to and as illustrated in Figs. 1 and 2, or Fig. 3 of the accompanying drawings.

16. An apparatus for cutting the end of a pipe, comprising a rod, a clamping unit on the rod with legs movable radially to engage an inner surface of a pipe and hold the rod axially of the pipe, and a cutting unit slidably mounted on the rod, the cutting unit having at least one cutting means which is rotatable about the rod in a plane perpendicular to the rod.

17. An apparatus according to claim 16, wherein the cutting unit is resiliently biased on the rod towards the clamping unit.

0254563

FIG.1a

FIG.1b

FIG.2a

FIG.2b

0254563

FIG.3a

FIG.3b

0254563

FIG.4

FIG.5a

FIG.5b